# EUROPEAN PATENT SPECIFICATION

(11) **EP 0 402 059 B1**
(45) Date of publication and mention of the grant of the patent: **01.06.1994**
(21) Application number: 90305993.9
(22) Date of filing: 01.06.1990
(51) Int. Cl.: A24D 1/02

(54) **Smoking article exhibiting reduced sidestream smoke, and wrapper paper therefor**
Rauchartikel mit geringer Seitenströmung des Rauches und Umhüllung dafür
Article à fumer et son enveloppe, présentant une émission latérale de fumée réduite

(30) Priority: 05.06.1989 US 361245
(43) Date of publication of application: 12.12.1990
(73) Proprietor: Philip Morris Products Inc., Richmond Virginia 23234 (US)
(72) Inventor: Goodman, Barbro L., Colonial Heights, Virginia 23834 (US); Houck, Willie Gray, Jr., Richmond, Virginia 23235 (US)
(74) Representative: Marlow, Nicholas Simon

(56) References cited:
- EP-A- 0 085 494
- EP-A- 0 133 575
- EP-A- 0 251 254
- EP-A- 0 290 911
- EP-A- 0 375 844
- US-A- 4 231 377

## Description

This invention relates to smoking articles such as cigarettes, and more particularly to cigarettes or cigarette-like smoking articles having reduced sidestream smoke.

Sidestream smoke is the smoke given off by the burning end of a cigarette or cigarette-like smoking article between puffs. Such smoke may be objectionable those near the smoker who are not smoking or who do not smoke.

It has therefore been desired to reduce the amount of sidestream smoke associated with cigarettes or cigarette-like smoking articles.

It has also been desired to provide cigarettes or cigarette-like smoking articles having reduced sidestream smoke.

EP-A-0 251 254 discloses a cigarette wrapper comprising a single layer of paper having a basis weight of 40g/m², a porosity of from 5 to 30cm/min at a pressure differential of 1 centibar (Coresta method) a filler loading of 30% calcium carbonate having a superficial surface of a least 20m²/g (by the BET method), from 6 to 12% by weight potassium acetate or sodium citrate. The wrapper is said to reduce the sidestream smoke emission of the cigarette.

EP-A-0 290 911 discloses a wrapper for a cigarette comprising a single layer of paper of initial porosity between 45 Coresta units, the actual porosity of which is raised by laser, mechanical or electrostatic perforation to form 50 to 250 Coresta units. The paper may also contain filler and burn additives such as potassium citrate or carbonate. Such a wrapper in conjunction with low packing density filler and a low efficiency filter, is said to reduce visible sidestream smoke emission.

EP-A-0 375 844, which forms part of the state of the art only by virtue of Art 54(3) EPC, discloses a wrapper for a cigarette comprising two layers of paper. The outer layer has a basis weight of from 20 to 60 g/m², a porosity of from 10 to 250 Coresta units, a filler, such as calcium carbonate, content of from 10 to 60% by weight and up to 50% burn additive. The inner layer has a basis weight of from 6 to 20 g/m², a porosity of up to 12 Coresta units and may contain up to 6% filler such as calcium carbonate and up to 2% burn additive such as sodium acetate. Such a wrapper is said to reduce the sidestream smoke emission of a cigarette employing the wrapper.

According to the present invention there is provided a cigarette wrapper for reducing sidestream smoke produced by a cigarette wrapped with the wrapper, the wrapper comprising outer and inner layers of paper, the outer layer of paper having a basis weight of 30 to 70, preferably about 50, grams per square metre, an initial porosity of 2 to 10, preferably about 5 cubic centimetres per minute by the Coresta method, a calcium carbonate filler loading of 30 to 40, preferably about 35, % by weight, the calcium carbonate having a surface area of 20 to 80, preferably about 25, square metres per gram by the BET method, 2 to 10% by weight of a burn chemical, preferably an alkali metal burn chemical such as citrate or succinate, particularly preferably about 5.5% by weight succinate, 0 to 1, preferably about 0.6% by weight monoammonium phosphate, and about 0 to 1, preferably about 0.3, % by weight sodium carboxy methyl cellulose, and being perforated for example by electrostatic perforation to increase its porosity to 50 to 100, preferably about 60, cubic centimetres per minute by the Coresta method, and the inner layer of paper having a basis weight of 15 to 25, preferably about 18, grams per square metre, a porosity of 20 to 40, preferably about 30, cubic centimetres per minute by the Coresta method, a calcium carbonate filler loading of 2 to 15, preferably about 3, % by weight, 0 to 2 % by weight of a burn chemical preferably an alkali metal burn chemical such as citrate or succinate, particularly preferably about 0.6% by weight citrate.

The invention also provide a cigarette comprising a wrapper according to the invention.

FIG. 1 is a simplified cross sectional view (taken along the line 1-1 in FIG. 2) of an embodiment of a cigarette according to the invention.

FIG. 2 is a simplified elevational view of an illustrative embodiment of a cigarette according to the invention.

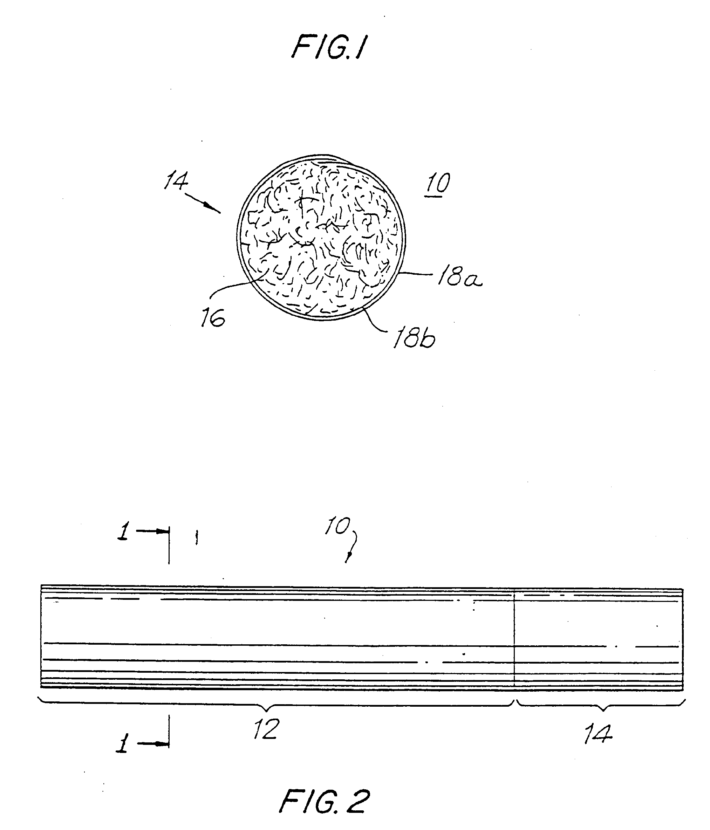

As shown in FIGS. 1 and 2, a cigarette 10 constructed in accordance with this invention includes tobacco rod 12 and filter 14. Tobacco rod 12 has a filling of tobacco 16 surrounded by two layers of paper 18a and 18b. Outer layer 18a is preferably slightly wider than inner layer 18b to ensure that the inner layer is completely covered by the outer layer in the finished cigarette. Filter 14 is entirely optional and can be omitted if desired.

Outer paper 18a has a basis weight of about 30-70 (preferably about 50) grams per square meter. It has an initial porosity of about 2-10 (preferably about 5) cubic centimeters of air per minute as determined by the industry-standard Coresta method. Outer paper 18a is made with a calcium carbonate filler loading of about 30-40% (preferably about 35%) by weight. The calcium carbonate used has a surface area of about 20-80 (preferably about 25) square meters per gram by the well-known BET method (see, for example, F.M. Nelson et al., "Determination of Surface Area", Analytical Chemistry, Vol. 30, No. 8, August 1958, pp. 1387-90, for a description of the BET method). This is a relatively high surface area for a filler in a cigarette paper. A typical surface area would be about 7-10 square meters per gram.

To help control or determine the puff count of the cigarette, outer paper 18a also includes about 2-10% by weight of a burn chemical such as succinate, citrate, or any other alkali metal burn chemical known to those in the industry. The preferred burn chemical additive is about 5.5% by weight succinate. In addition to helping to control or determine the burn rate of the paper, the burn chemical is believed to act as a fluxing or dispersing agent for the calcium carbonate and to combine with the calcium carbonate to help make a relatively air- and smoke-impervious ash. The imperviousness of the ash (which is also promoted by the high surface area of the calcium carbonate) is believed to contribute significantly to the reduction of sidestream smoke.

Outer paper 18a also includes about 0-1% (preferably about .6%) by weight monoammonium phosphate. This chemical tends to reduce unattractive streaking of the outer paper due to condensation on the inside of the paper following puffs. The tendency of the paper to streak in this manner is increased because the porosity of the paper has been reduced to reduce sidestream smoke. Monoammonium phosphate is used to eliminate this possible cosmetic problem.

Outer paper 18a further includes about 0-1% (preferably about .3%) by weight sodium carboxy methyl cellulose. This chemical, which acts as a film former, contributes to the imperviousness of the ash, which, as has been mentioned, helps to reduce sidestream smoke. Sodium carboxy methyl cellulose is also believed to act as a carrying agent to help get the burning agent (e.g., succinate) into the paper.

Outer paper 18a is perforated (e.g., by conventional electrostatic perforation) to increase its porosity to about 50-100 (preferably about 60) cubic centimeters of air per minute by the Coresta method. Perforation of outer paper 18a in this manner improves the mechanical feel of the cigarette. It also provides some pressure relief for the cigarette in order to reduce the amount of smoke coming out of the proximal end of the filter or any perforations in the tipping overwrap between puffs. The inner paper 18b discussed in detail below minimizes the visible smoke escaping through the perforations in the outer paper.

Inner paper 18b adds another layer to the paper ash to increase its imperviousness and to thereby help reduce sidestream smoke. Inner paper 18b also adds strength to the cigarette and improves its overall appearance. Inner paper 18b has a basis weight of about 15-25 (preferably about 18) grams per square meter. It has a porosity of about 20-40 (preferably about 30) cubic centimeters of air per minute (Coresta). Because of this relatively high porosity, inner paper 18a does not require electrostatic perforation. Inner paper 18b is made with a calcium carbonate filler loading of about 2-15% (preferably about 3%) by weight. This relatively low calcium carbonate loading helps to slow down the burn rate of the inner paper and contributes to reducing the amount of visible smoke that would otherwise come out the perforations in the outer paper. To help control or determine the burn rate of the paper, inner paper 18b also includes about 0-2% by weight of a burn chemical such as succinate, citrate, or any other alkali metal burn chemical known to those in the industry. The preferred burn chemical additive is about .6% by weight citrate.

## Claims

1. A cigarette wrapper for reducing sidestream smoke produced by a cigarette wrapped with the wrapper, the wrapper comprising an outer (18a) and inner (18b) layers of paper, the outer layer of paper having a basis weight of 30 to 70 grams per square meter, an initial porosity of 2 to 10 cubic centimeters per minute by the Coresta method, a calcium carbonate filler loading of 30 to 40% by weight, the calcium carbonate having a surface area of 20 to 80 square meters per gram by the BET method, 2 to 10% by weight of a burn chemical, about 0-1% by weight monoammonium phosphate, and 0 to 1% by weight of sodium carboxy methyl cellulose, the paper being perforated to increase its porosity to 50 to 100 cubic centimeters per minute by the Coresta method, and the inner layer of paper having a basis weight of 15 to 25 grams per square meter, a porosity of 20 to 40 cubic centimeters per minute by the Coresta method, a calcium carbonate filler loading of 2 to 15% by weight, and 0 to 2% by weight of a burn chemical.

2. A wrapper according to claim 1 in which the basis weight of the outer layer (18a) of paper is about 50 grams per square meter.

3. A wrapper according to claim 1 or 2 in which the initial porosity of the outer layer (18a) of paper is about 5 cubic centimeters per minute by the Coresta method.

4. A wrapper according to claim 1, 2 or 3 in which the calcium carbonate filler loading of the outer layer (18a) of paper is about 35% by weight.

5. A wrapper according to any preceding claim in which the calcium carbonate of the outer layer (18a) of paper has a surface area of about 25 square meters per gram by the BET method.

6. A wrapper according to any preceding claim in which the burn chemical in the outer layer (18a) of paper is an alkali metal burn chemical, such as succinate or citrate.

7. A wrapper according to any preceding claim in which the burn chemical the outer layer (18a) of paper is succinate in an amount of about 5.5% by weight.

8. A wrapper according to any preceding claim in which the the outer layer (18a) of paper contains about 0.6% by weight monoammonium phosphate.

9. A wrapper according to any preceding claim in which the the outer layer (18a) of paper contains about 0.3% by weight sodium carboxy methyl cellulose.

10. A wrapper according to any preceding claim in which the porosity of the outer layer (18a) of paper is increased to about 60 cubic centimeters per minute by the Coresta method.

11. A wrapper according to any preceding claim in which the porosity of the outer layer (18a) of paper is increased by electrostatic perforation.

12. A wrapper according to any preceding claim in which the basis weight of the inner layer (18b) of paper is about 18 grams per square meter.

13. A wrapper according to any preceding claim in which the porosity of the inner layer (18b) of paper is about 30 cubic centimeters per minute by the Coresta method.

14. A wrapper according to any preceding claim in which the calcium carbonate filler loading of the inner layer (18b) of paper is about 3% by weight.

15. A wrapper according to any preceding claim in which the burn chemical in the inner layer (18b) of paper is an alkali metal burn chemicals, such as succinate or citrate.

16. A wrapper according to any preceding claimin which the inner layer (18b) of paper contains about 0.6% by weight citrate as the burn chemical.

17. A cigarette (10) comprising a wrapper according to any preceding claim.

## Patentansprüche

1. Zigarettenumhüllung zum Reduzieren des Seitenstromrauchs, welcher von einer mit der Umhüllung umhüllten Zigarette erzeugt wird, wobei die Umhüllung eine äußere (18a) und eine innere (18b) Schicht aus Papier aufweist, die äußere Papierschicht ein Flächengewicht von 30 bis 70 Gramm pro Quadratmeter sowie eine Anfangsporosität von 2 bis 10 Kubikzentimeter pro Minute gemäß der Corestamethode und einen Kalziumkarbonatfüllstoffzusatz von 30 bis 40 Gew.-%, wobei das Kalziumkarbonat einen Oberflächenbereich von 20 bis 80 Quadratmeter pro Gramm gemäß der BET-Methode ausmacht, 2 bis 10 Gew.-% eines chemischen Brennstoffs, etwa 0 bis 1 Gew.-% Monoammoniumphosphat und 0 bis 1 Gew.-% Natriumcarboxymethylzellulose hat, wobei das Papier zur Vergrößerung der Porosität auf 50 bis 100 Kubikzentimeter pro Minute gemäß der Corestamethode perforiert ist, und die innere Papierschicht ein Flächengewicht von 15 bis 25 Gramm pro Quadratmeter, eine Porosität von 20 bis 40 Kubikzentimeter pro Minute gemäß der Corestamethode, einen Kalziumkarbonatfüllstoffzusatz von 2 bis 15 Gew.-% und 0 bis 2 Gew.-% eines chemischen Brennstoffes hat.

2. Umhüllung nach Anspruch 1, bei der das Flächengewicht der äußeren Schicht (18a) aus Papier etwa 50 Gramm pro Quadratmeter beträgt.

3. Umhüllung nach Anspruch 1 oder 2, bei der die Anfangsporosität der äußeren Schicht (18a) aus Papier etwa 5 Kubikzentimeter pro Minute gemäß der Corestamethode beträgt.

4. Umhüllung nach Anspruch 1, 2 oder 3, bei der der Kalziumkarbonatfüllstoffzusatz der äußeren Schicht (18a) aus Papier etwa 35 Gew.-% ausmacht.

5. Umhüllung nach einem der vorangehenden Ansprüche, bei der das Kalziumcarbonat der äußeren Schicht (18a) aus Papier einen Flächenbereich von etwa 25 Quadratmeter pro Gramm gemäß der BET-Methode ausmacht.

6. Umhüllung nach einem der vorangehenden Ansprüche, bei der der chemische Brennstoff in der äußeren Schicht (18a) aus Papier ein chemischer Alkalimetall-Brennstoff, wie Succinat oder Zitrat, ist.

7. Umhüllung nach einem der vorangehenden Ansprüche, bei der der chemische Brennstoff der äußeren Schicht (18a) aus Papier Succinat in einer Menge von etwa 5,5 Gew.-% ist.

8. Umhüllung nach einem der vorangehenden Ansprüche, bei der die äußere Schicht (18a) aus Papier etwa 0,6 Gew.-% Monoammoniumphosphat enthält.

9. Umhüllung nach einem der vorangehenden Ansprüche, bei der die äußere Schicht (18a) aus Papier etwa 0,3 Gew.-% Natriumcarboxymethylcellulose enthält.

10. Umhüllung nach einem der vorangehenden Ansprüche, bei der die Porosität der äußeren Schicht (18a) aus Papier auf etwa 60 Kubikzentimeter pro Minute gemäß der Corestamethode vergrößert ist.

11. Umhüllung nach einem der vorangehenden Ansprüche, bei der die Porosität der äußeren Schicht (18a) aus Papier mittels elektrostatischer Perforation vergrößert wird.

12. Umhüllung nach einem der vorangehenden Ansprüche, bei der das Flächengewicht der inneren Schicht (18b) aus Papier etwa 18 Gramm pro Quadratmeter beträgt.

13. Umhüllung nach einem der vorangehenden Ansprüche, bei der die Porosität der inneren Schicht (18b) aus Papier etwa 30 Kubikzentimeter pro Minute gemäß der Corestamethode beträgt.

14. Umhüllung nach einem der vorangehenden Ansprüche, bei der der Kalziumkarbonatfüllstoffzusatz der inneren Schicht (13b) aus Papier etwa 3 Gew.-% ausmacht.

15. Umhüllung nach einem der vorangehenden Ansprüche, bei der der chemische Brennstoff in der inneren Schicht (18b) aus Papier ein chemischer Alkalimetallbrennstoff, wie Succinat oder Zitrat, ist.

16. Umhüllung nach einem der vorangehenden Ansprüche, bei der die innere Schicht (18b) aus Papier etwa 0,6 Gew.-% Zitrat als chemischen Brennstoff enthält.

17. Zigarette (10), welche eine Umhüllung nach einem der vorangehenden Ansprüche aufweist.

## Revendications

1. Enveloppe de cigarette destinée à réduire la fumée latérale produite par une cigarette entourée par l'enveloppe, l'enveloppe comprenant des couches externe (18a) et interne (18b) de papier, la couche externe de papier ayant une masse surfacique comprise entre 30 et 70 g/m², une porosité initiale comprise entre 2 et 10 cm³/min déterminée par la méthode Coresta, une charge de carbonate de calcium de 30 à 40 % en poids, le carbonate de calcium ayant une surface spécifique comprise entre 20 et 80 m²/g déterminée par la méthode BET, 2 à 10 % en poids d'un adjuvant chimique de combustion, environ 0 à 1 % en poids de phosphate monoammonique, et 0 à 1 % en poids de carboxyméthylcellulose sodique, le papier étant perforé afin que sa porosité soit accrue entre 50 et 100 cm³/min déterminée par la méthode Coresta, et la couche interne de papier ayant une masse surfacique de 15 à 25 g/m², une porosité de 20 à 40 cm³/min déterminée par la méthode Coresta, une charge de carbonate de calcium comprise entre 2 et 15 % en poids, et 0 à 2 % en poids d'un adjuvant chimique de combustion.

2. Envoloppe selon la revendication 1, dans laquelle la masse surfacique de la couche externe (18a) de papier est d'environ 50 g/m².

3. Enveloppe selon la revendication 1 ou 2, dans laquelle la porosité initiale de la couche externe (18a) de papier est d'environ 5 cm³/min déterminée par la méthode Coresta.

4. Enveloppe selon la revendication 1, 2 ou 3, dans laquelle la charge de carbonate de calcium de la couche externe (18a) de papier est d'environ 35 % en poids.

5. Enveloppe selon l'une quelconque des revendications précédentes dans laquelle le carbonate de calcium de la couche externe (18a) de papier a une surface spécifique d'environ 25 m²/g déterminée par la méthode BET.

6. Enveloppe selon l'une quelconque des revendications précédentes, dans laquelle l'adjuvant chimique de combustion de la couche externe (18a) de papier est un adjuvant chimique alcalin de combustion, tel qu'un succinate ou un citrate.

7. Enveloppe selon l'une quelconque des revendications précédentes, dans laquelle l'adjuvant chimique de combustion de la couche externe (18a) de papier est un succinate en quantité d'environ 5,5 % en poids.

8. Enveloppe selon l'une quelconque des revendications précédentes, dans laquelle la couche externe (18a) de papier contient environ 0,6 % en poids de phosphate monoammonique.

9. Enveloppe selon l'une quelconque des revendications précédentes, dans laquelle la couche externe (18a) de papier contient environ 0,3 % en poids de carboxyméthylcellulose sodique.

10. Enveloppe selon l'une quelconque des revendications précédentes, dans laquelle la porosité de la couche externe (18a) de papier est élevée à environ 60 cm³/min déterminée par la méthode Coresta.

11. Enveloppe selon l'une quelconque des revendications précédentes, dans laquelle la porosité de la couche externe (18a) de papier est augmentée par perforation électrostatique.

12. Enveloppe selon l'une quelconque des revendications précédentes, dans laquelle la masse surfacique de la couche interne (18b) de papier est d'environ 18 g/m².

13. Enveloppe selon l'une quelconque des revendications précédentes, dans laquelle la porosité de la couche interne (18b) de papier est d'environ 30 cm³/min déterminée par la méthode Coresta.

14. Enveloppe selon l'une quelconque des revendications précédentes, dans laquelle la charge de carbonate de calcium de la couche interne (18b) de papier est d'environ 3 % en poids.

15. Enveloppe selon l'une quelconque des revendications précédentes, dans laquelle l'adjuvant chimique de combustion de la couche interne (18b) de papier est formé d'un adjuvant chimique alcalin de combustion, tel qu'un succinate ou un citrate.

16. Enveloppe selon l'une quelconque des revendications précédentes, dans laquelle la couche interne (18b) de papier contient environ 0,6 % en poids de citrate formant l'adjuvant chimique de combustion.

17. Cigarette (10) comprenant une enveloppe selon l'une quelconque des revendications précédentes.
